# EUROPÄISCHE PATENTANMELDUNG

(11) **EP 4 309 502 A1**
(43) Veröffentlichungstag der Anmeldung: **24.01.2024**
(21) Anmeldenummer: 22186183.4
(22) Anmeldetag: 21.07.2022
(51) Int. Cl.: A21B 5/02

(54) **MODULARE BACKPLATTENVORRICHTUNG MIT VERSENKTEN TRÄGERN**

(71) Anmelder: Bühler Food Equipment GmbH, 2100 Leobendorf (AT)
(72) Erfinder: Buczolits, Peter, 2000 Stockerau (AT); Suess, Daniel, 3430 Tulln (AT)
(74) Vertreter: Puchberger & Partner Patentanwälte

(57) **Zusammenfassung**

Die Erfindung betrifft eine Backplattenvorrichtung, ein Backplattensystem, eine Backplatte, ein Backplattengestell und eine Backvorrichtung, wobei die Backplattenvorrichtung zwei Traggestelle (1) mit mindestens einem Träger (2), zwei Backplatten (3), die jeweils an einem der Traggestelle (1) angebracht sind und zwei beidseitig der Backplatten (3) angeordnete und über die Träger (2) miteinander verbundene Verbindungsvorrichtungen (4) aufweist, wobei die Verbindungsvorrichtungen (4) und die Traggestelle (1) derart ausgestaltet sind, dass die Backplattenvorrichtung öffenbar, schließbar und in der geschlossenen Stellung zur Bildung einer Überdruckbackform verriegelbar ausgebildet ist, wobei in den der Überdruckbackform abgewandten Rückseiten (5) der Backplatten (3) der Form und dem Verlauf der Träger (2) angepasste Nuten (6) vorgesehen sind und wobei die Träger (2) der Traggestelle (1) zumindest teilweise in den Nuten (6) versenkt sind.

## Beschreibung

Die Erfindung betrifft eine Backplattenvorrichtung, ein Backplattensystem, eine Backplatte, ein Backplattengestell und eine Backvorrichtung gemäß den unabhängigen Patentansprüchen.

Zur industriellen Herstellung von Waffelprodukten ist es bekannt, einen im Wesentlichen flüssigen Waffelteig, der im unausgebackenen Zustand etwa 50-70% Wasser enthält, in eine geöffnete Backform einzubringen, wobei die Backform als Backzange ausgebildet ist. In weiterer Folge wird die Backzange nach dem Einbringen der Backmasse geschlossen und durch einen beheizten Backraum befördert. Durch das Erhitzen der Backform und damit auch der Backmasse verdampfen deren flüchtige Bestandteile. Dabei entsteht in der Backzange ein erhöhter Druck, dessen Kräfte auf die Backplatten der Backzange wirken.

Es ist bekannt, dass Backzangen Backzangengestelle umfassen, an denen die Backplatten angebracht sind. Diese Backzangengestelle sind öffenbar und schließbar ausgebildet, wobei im Innenbereich zwei Backplatten angebracht sind, die die Backform bilden. Nachteilig an derartigen Konstruktionen ist, dass das außenliegende Gestell die Beheizung der Backzange von außen beeinträchtigt.

Dem Stand der Technik sind auch Backzangen mit selbsttragenden Backplatten ohne Backplattengestelle zu entnehmen. Bei diesen selbsttragenden Backplatten tritt jedoch das Problem auf, dass komplizierte Verstellmechanismen eingesetzt werden müssen, die einer Justierung des Verlaufs der Backplatten dienen und die der Aufweitung der Backform durch die Druckkräfte entgegenwirken. Auch diese Verstellmechanismen beeinträchtigen in der Regel die gleichmäßige Beheizung der Backform und der Backplatten.

Zudem sind Backplatten und die an den Backplatten angebrachten Abschlussleisten einem gewissen Verschleiß unterworfen, sodass diese von Zeit zu Zeit getauscht werden müssen. Auch bei einem Produktwechsel müssen bei derart ausgebildeten Backzangen jeweils die gesamten Backzangen und nicht nur die Backplatten getauscht werden.

Aufgabe der Erfindung ist es nun, eine Backplattenvorrichtung, ein Backplattensystem, eine Backplatte und/oder eine Backvorrichtung zu schaffen, die die Nachteile des Standes der Technik überwinden. Insbesondere soll die Backplattenvorrichtung einen effizienten Betrieb einer Backvorrichtung ermöglichen.

Dies wird beispielsweise dadurch erreicht, dass eine effiziente Beheizung erfolgen kann. Andererseits wird dies z.B. dadurch erreicht, dass ein einfacher Wechsel der Backplatten ermöglicht ist. Zudem soll vorzugsweise auch ein einfaches Justieren der Backplatten erfolgen können. Zudem soll bevorzugt auch eine hohe Produktqualität erzielt werden können.

Die erfindungsgemäße Aufgabe wird insbesondere durch die Merkmale der unabhängigen Patentansprüche gelöst.

Die Erfindung betrifft insbesondere eine Backplattenvorrichtung, beispielsweise eine Backzange, zur Herstellung unter Überdruck gebackener, knusprig spröder Waffeln aus einer im unausgebackenen Zustand 50-70% Wasser enthaltenden Backmasse, umfassend:
- zwei Traggestelle, die jeweils mindestens einen Träger aufweisen,
- zwei Backplatten, die jeweils an einem der Traggestelle angebracht sind
- und zwei beidseitig der Backplatten angeordnete und über die Träger miteinander verbundene Verbindungsvorrichtungen.

Bevorzugt sind die Verbindungsvorrichtungen und die Traggestelle derart ausgestaltet, dass die Backplattenvorrichtung öffenbar, schließbar und in der geschlossenen Stellung zur Bildung einer Überdruckbackform verriegelbar ausgebildet ist.

Bevorzugt ist vorgesehen, dass die Träger der Traggestelle in den der Überdruckbackform abgewandten Rückseiten der Backplatten zumindest teilweise versenkt sind.

Gegebenenfalls sind in den Rückseiten der Backplatten der Form und dem Verlauf der Träger angepasste Nuten vorgesehen. In diesen Nuten sollen die Träger zumindest teilweise versenkt sein. Die Träger können gemäß dieser Definition vollständig in den Nuten versenkt sein oder die Nuten bzw. die Rückseiten der Backplatten um ein gewisses Maß überragen.

Gegebenenfalls sind die Träger jeweils von drei Seiten von den Nuten umgeben bzw. umgriffen.

Gegebenenfalls weisen die Nuten und die in den Nuten versenkten Träger einen Abstand zu den in Längsrichtung der Träger verlaufenden Rändern der Backplatten auf.

Gegebenenfalls können die Backplatten die Nuten und die in den Nuten versenkten Träger in Querrichtung der Träger mit einem Überstand überragen.

Gegebenenfalls kann der Überstand mehr als 5% der in Querrichtung der Träger gemessenen Backplattenbreite betragen. Gegebenenfalls beträgt der Überstand weniger als 20%.

Gegebenenfalls ist vorgesehen, dass sich die Träger von einer Verbindungsvorrichtung bis zur anderen Verbindungsvorrichtung erstrecken.

Gegebenenfalls ist vorgesehen, dass die Träger als Biegeträger zur Aufnahme der beim Backen in der Überdruckbackform ausgehenden Druckkräfte wirken.

Gegebenenfalls ist vorgesehen, dass die Traggestelle jeweils zwei an gegenüberliegenden Seiten angeordnete Seitenteile aufweisen, an denen die Verbindungsvorrichtungen angebracht sind und sich die Träger jeweils von einem Seitenteil bis zum anderen Seitenteil erstrecken und dadurch ein starres Traggestell bilden. In dieser Ausführungsform können die Seitenteile aber auch als Teile der Verbindungsvorrichtungen betrachtet werden.

Gegebenenfalls ist vorgesehen, dass pro Traggestell zwei Träger vorgesehen sind, die sich beabstandet voneinander und beabstandet von den in Längsrichtung der Träger verlaufenden Rändern der Backplatte von einer Verbindungsvorrichtung zur anderen Verbindungsvorrichtung bzw. von einem Seitenteil zum anderen Seitenteil erstecken.

Gegebenenfalls ist vorgesehen, dass eine erste Verbindungsvorrichtung und eine zweite Verbindungsvorrichtung vorgesehen sind.

Gegebenenfalls ist vorgesehen, dass ein erstes Seitenteil und ein zweites Seitenteil vorgesehen sind.

Gegebenenfalls sind die Backplatten während des Backprozesses durch den in der Überdruckbackform herrschenden Überdruck aufgebogen bzw. aufgewölbt.

Gegebenenfalls weisen die, in einer normal zur Längsrichtung der Träger verlaufenden Schnittebene betrachteten, Biegelinien der Backplatten jeweils mindestens zwei oder genau zwei Wendepunkte auf.

Gegebenenfalls sind die Träger jeweils derart in den Backplatten versenkt, dass die der Überdruckbackform abgewandten Rückseiten der Backplatten zusammen mit den freiliegenden Abschnitten der Träger die außenliegenden Heizflächen der Backplattenvorrichtung bilden.

Gegebenenfalls sind die Träger jeweils derart in den Backplatten versenkt, dass die über die freiliegenden Abschnitte der Träger eingebrachte Wärmeenergie über die in den Backplatten versenkten Abschnitte der Träger an die Backplatten bzw. die Nuten der Backplatten übertragen wird.

Gegebenenfalls ist vorgesehen, dass pro Backplatte eine Justieranordnung vorgesehen ist, die eine Einstellung der Lage und/oder des Verlaufs einer Backplatte gegenüber jenem Traggestell erlaubt, an dem die Backplatte angebracht ist.

Gegebenenfalls ist vorgesehen, dass die Justieranordnungen mehrere in oder an den Trägern angeordnete und/oder durch die Träger hindurch verlaufende Stellmittel, wie insbesondere Stellschrauben umfasst.

Gegebenenfalls ist vorgesehen, dass die Backplatten jeweils durch die Justieranordnungen mit dem Traggestell bzw. deren Trägern verbunden sind.

Gegebenenfalls ist vorgesehen, dass die Backplatten ausschließlich durch die Justieranordnungen an den Traggestell bzw. deren Trägern angebracht sind.

Gegebenenfalls ist vorgesehen, dass die Rückseiten der Backplatten jeweils eine Oberfläche zur gleichmäßigen Beheizung der Backplatte und der Überdruckbackform, wie insbesondere ein Waben-, Pyramiden- oder Rippenmuster, oder eine glatte Oberfläche, aufweisen.

Gegebenenfalls ist vorgesehen, dass eine, insbesondere die erste Verbindungsvorrichtung als Scharnier ausgebildet ist und die andere, insbesondere die zweite Verbindungsvorrichtung als Verriegelungsvorrichtung, sodass die Backplattenvorrichtung als Backzange ausgebildet ist.

Gegebenenfalls ist vorgesehen, dass zur Bildung der Überdruckbackform Abschlussleisten wie Dichtleisten und/oder Dampfleisten vorgesehen sind.

Insbesondere betrifft die Erfindung ein Backplattensystem umfassend eine beschriebene Backplattenvorrichtung und mindestens eine weitere Backplatte, die eine mit einem der Traggestelle verbundene Backplatte ersetzt, wobei die weitere Backplatte insbesondere:
- eine defekte oder verschlissene Backplatte gleichartig ersetzt,
- eine Backplatte zur Herstellung einer anderen Waffelform ist,
- eine Backplatte mit einer anders ausgestalteten Rückseite ist,
- oder eine Backplatte aus einem anderen Material ist.

Gegebenenfalls betrifft die Erfindung eine Backplatte, eingerichtet zum Einsatz in einer beschriebenen Backplattenvorrichtung und/oder in einem beschriebenen Backplattensystem, umfassend eine Rückseite mit einem Bereich, insbesondere mit einer Nut, zur zumindest teilweisen Aufnahme eines Trägers.

Gegebenenfalls betrifft die Erfindung ein Backplattengestell, umfassend: zwei Traggestelle, die jeweils mindestens einen Träger aufweisen, zwei beidseitig der Backplatten angeordnete und über die Träger miteinander verbundene Verbindungsvorrichtungen, wobei die Verbindungsvorrichtungen und die Traggestelle derart ausgestaltet sind, dass das Backplattengestell öffenbar, schließbar und in der geschlossenen Stellung zur Bildung einer Überdruckbackform verriegelbar ausgebildet ist.

Insbesondere betrifft die Erfindung eine Backvorrichtung zur Herstellung unter Überdruck gebackener, knusprig spröder Waffeln aus einer im unausgebackenen Zustand 50-70% Wasser enthaltenden Backmasse, umfassend einen Endlosförderer und mehrere entlang des Endlosförderers vorgesehene Backplattenvorrichtungen, die aneinandergereiht jeweils nacheinander:
- einen Backmassenauftragsbereich zum Auftrag einer Backmasse auf eine geöffnete Backplattenvorrichtung,
- einen Schließbereich zum Schließen der Backplattenvorrichtungen,
- einen Backraum zum Backen der Backprodukte in den geschlossenen Backplattenvorrichtungen, in dem mindestens eine Heizanordnung zur Beheizung der im Backraum befindlichen Backplattenvorrichtungen vorgesehen ist,
- einen Öffenbereich zum Öffnen der Backplattenvorrichtungen
- und einen Waffelentnahmebereich zur Entnahme der gebackenen Waffeln aus den geöffneten Backplattenvorrichtungen, durchlaufen,
wobei die die Backplattenvorrichtungen erfindungsgemäß ausgebildet sind.

Gegebenenfalls ist vorgesehen, dass die Heizanordnung mindestens einen Induktor zur induktiven Beheizung einer Backplatte umfasst, wobei zwischen dem Induktor und den an dem Induktor vorbeibewegten Backplatten jeweils ein Induktorspalt mit einer Spaltbreite freigehalten ist.

Gegebenenfalls ist vorgesehen, dass eine Stufe, um die einer der Träger aus der Rückseite einer Backplatte steht, kleiner ist als die Spaltbreite des Induktorspalts.

Bevorzugt umfasst die Backplattenvorrichtung Laufrollen, sodass die Backplattenvorrichtung beispielsweise als Backzangenwagen ausgebildet ist. Gegebenenfalls umfasst die Backplattenvorrichtung Führungsrollen zur seitlichen Führung der Backplattenvorrichtung entlang deren Bewegungspfad in der Backvorrichtung.

Gegebenenfalls umfasst die Backplattenvorrichtung Steuerglieder, die zur Steuerung einer Bewegung, beispielsweise zum Öffnen und Schließen der Backplattenvorrichtung, mit Steuergliedern der Backvorrichtung, wie insbesondere mit einer Kulisse der Backvorrichtung, in Wirkkontakt stehen.

Gegebenenfalls ist vorgesehen, dass die Traggestelle zwischen den Trägern einen Traggestellinnenraum aufweisen, und sich die Backplatten in den jeweiligen Traggestellinnenraum erstrecken. Gegebenenfalls ist vorgesehen, dass sich die Backplatten durch den jeweiligen Traggestellinnenraum hindurch erstrecken.

Im Bereich der Nuten der Backplatte sind bevorzugt mehrere Elemente vorgesehen, die Teile einer Justieranordnung sind. Die Justieranordnung ist dazu geeignet und/oder eingerichtet, eine Wahl der Lage der Backplatte gegenüber einem Traggestell und/oder eine Wahl des Verlaufs der Backplatte gegenüber dem Traggestell zu ermöglichen. Insbesondere sind die Elemente der Backplatte, die Teil der Justieranordnung sein können, Gewindebohrungen oder andere Elemente, die eine Justierung der Backplatte über Stellmittel erlauben. Bevorzugt weist die Backplatte eine rechteckige Form auf. Die Nuten mit den Elementen der Justieranordnung erstrecken sich bevorzugt über die längere Seite der Backplatten. Insbesondere sind die Elemente in einer Reihe angeordnet. Beispielsweise sind pro Seite zwei, drei oder mehr derartiger Elemente vorgesehen.

Bevorzugt sind die Elemente der Justieranordnung in allen Ausführungsformen ausschließlich im Bereich der Nuten der Backplatte vorgesehen.

Die Backplattenvorrichtung umfasst zwei Traggestelle und zwei Backplatten, die an den Traggestellen angebracht sind. Insbesondere kann ein Backplattensystem gebildet sein, bei dem an einem Traggestell wahlweise unterschiedliche Backplatten angebracht werden können. Dadurch kann in effizienter Weise das Traggestell für unterschiedliche Produkte aber auch für unterschiedliche Backvorrichtungen eingesetzt werden. Insbesondere kann ein und dasselbe Traggestell beispielsweise für unterschiedliche Arten der Beheizung verwendet werden. Lediglich die Backplatten müssen an die jeweilige Beheizung angepasst werden. Auch bei einem Produktwechsel, beispielsweise bei der Wahl eines anderen Waffelblattformates, können dieselben Traggestelle verwendet werden, wobei zur Wahl der unterschiedlichen Formate die Backplatten getauscht werden. Auch bei einem Verschleiß der Backplatten muss nicht die gesamte Backplattenvorrichtung getauscht werden, sondern die Traggestelle und die an den Traggestellen angebrachten anderen Komponenten, wie beispielsweise Laufrollen, Führungsrollen und/oder Verbindungsvorrichtungen können weiter verwendet werden. Die verschlissenen Backplatten können separat getauscht werden.

Diese Modularität ermöglicht eine hohe Flexibilität in der Wahl der Einsatzbereiche der Backplattenvorrichtung bzw. des Backplattensystems und dadurch auch eine Verbesserung der Effizienz im Einsatz.

Die Konstruktion erlaubt es, die Materialien der Traggestelle und der Backplatten unabhängig voneinander zu wählen. Dadurch kann ein Backplattenmaterial gewählt werden, das eine hohe Wärmekapazität aufweist und das eine gleichmäßige Wärmeleitung bzw. Wärmebereitstellung über die gesamte Backform ermöglicht.

Backplatten und Traggestelle können aus den gleichen Materialien bestehen bzw. aus dem gleichen Material gefertigt sein, um einen Unterschied in der thermischen Ausdehnung zu vermeiden. Denkbar ist aber auch, dass die Traggestelle aus einem anderen Material gefertigt sind als die Backplatten.

Insbesondere kann das Traggestell aus Gusseisen, beispielsweise aus Sphäroguss gefertigt sein. Die Traggestelle sind gegebenenfalls aus Profilen zusammengesetzt oder einstückig gegossen. Die Backplatten sind bevorzugt aus Gusseisen, insbesondere aus Sphäroguss gefertigt.

Die Traggestelle sind bevorzugt leiterförmig ausgebildet und weisen dadurch einen Traggestellinnenraum auf. Dieser Traggestellinnenraum ist insbesondere jener Raum, der zwischen den Trägern eines Traggestells liegt. Das Traggestell bildet dadurch ein Fenster, in dem zumindest ein Abschnitt der Backplatte angeordnet ist. Insbesondere ist der Abschnitt der Backplatte derart in den Traggestellinnenraum eingesetzt, dass er eine Heizfläche, insbesondere eine außenliegende Heizfläche der Backplattenvorrichtung bildet.

Bevorzugt sind die Träger in den Rückseiten der Backplatten versenkt. Gegebenenfalls schließen die Rückseiten der Backplatten mit den Trägern im Wesentlichen bündig ab. Gegebenenfalls überragen die Rückseiten der Backplatten den jeweiligen Träger.

Bevorzugt ist vorgesehen, dass die Backplatten ausschließlich im Bereich des Traggestells mit dem Traggestell verbunden sind.

Bevorzugt ist eine Justieranordnung vorgesehen, die eine Einstellung der Lage und/oder des Verlaufs einer Backplatte gegenüber jenem Traggestell erlaubt, an dem die Backplatte angebracht ist. Die Justieranordnung umfasst bevorzugt mehrere Stellmittel wie beispielsweise Stellschrauben. Diese Stellmittel sind bevorzugt am bzw. im Traggestell angeordnet. Beispielsweise verlaufen die Stellmittel in allen Ausführungsformen durch das Traggestell hindurch in die jeweilige Backplatte. Dadurch kann verhindert werden, dass die Stellmittel die Wärmeübertragung auf die Backplatten maßgeblich beeinträchtigen und insbesondere, dass die Stellmittel die Rückseiten der Backplatten zusätzlich abdecken.

Bevorzugt sind mehrere Stellmittel im Verlauf des Traggestells angeordnet. Durch individuelle Verstellung der Stellmittel kann dadurch die Lage und gegebenenfalls auch der Verlauf der Backplatten eingestellt werden. Beispielsweise können vier, sechs oder mehr Stellmittel pro Backplatte bzw. pro Traggestell vorhanden sein.

Bevorzugt ist in allen Ausführungsformen vorgesehen, dass die Backplatte durch die Justieranordnung mit dem Traggestell verbunden ist. Dadurch kann die Verwendung zusätzlicher Verbindungsmittel entfallen, wodurch die Konstruktion vereinfacht wird. Zusätzlich können dadurch weitere die Wärmeübertragung störende Verbindungsmittel entfallen.

Die Backplatten sind bevorzugt derart ausgestaltet, dass sie die von der Heizvorrichtung der Backvorrichtung eingebrachte Wärme möglichst gleichmäßig auf die Backform übertragen.

Das Traggestell, insbesondere dessen Träger, ist bevorzugt als Biegeträger zur Aufnahme der beim Backen in der Überdruckbackform entstehenden Druckkräfte ausgebildet. Die Backplatten einer Überdruckbackform sind je an einem Traggestell angebracht. Die beiden Traggestelle einer Backplattenvorrichtung sind beidseitig der Backplatten durch Verbindungsvorrichtungen miteinander verbunden bzw. miteinander verbindbar. Beim Backen sind die beiden Traggestelle durch die Verbindungsvorrichtungen bevorzugt beidseitig fest miteinander verbunden. Der zwischen den Backplatten in der Überdruckbackform entstehende Druck wirkt über die Backplatten auf die beiden Traggestelle. Dabei werden die Träger zwischen den beiden Verbindungsvorrichtungen auf Biegung beansprucht und wirken dadurch als Biegeträger.

In weiterer Folge wird die Erfindung anhand von exemplarischen Ausführungen und Figuren weiter beschrieben.

Zwischen dem Traggestell und der Backplatte ist bevorzugt ein Spalt, insbesondere ein Justierspalt, freigehalten. Dieser Justierspalt ermöglicht eine Relativbewegung des Traggestells gegenüber der Backplatte. Beispielsweise kann über die Justieranordnung die Lage der Backplatte gegenüber dem Traggestell variiert werden. Für diese Beweglichkeit kann bevorzugt ein gewisses Spiel bzw. ein Spalt freigehalten werden. Hierzu weisen die Nuten bevorzugt ein gewisses Übermaß gegenüber den Trägern auf.

Ein Träger der Backplattenvorrichtung kann beispielsweise derart gegenüber der Backplatte und deren Nut positioniert sein, dass der versenkte Abschnitt des Trägers an allen drei Seiten einen Abstand zu der Nut bzw. zu der Backplatte aufweist.

Die Träger sind in den der Überdruckform abgewandten Rückseiten der Backplatten - zumindest teilweise - versenkt. So können die Träger gegebenenfalls über die Rückseiten der Backplatten ragen.

Die Rückseite einer Backplatte ist bei einer glatten Ausführung die glatte rückseitige Abschlussfläche der Backplatte. Bei einer reliefartigen Ausgestaltung der Backplatte wird als Rückseite die außenliegende einhüllende des Reliefs verstanden, also beispielsweise eine im Wesentlichen gerade Fläche bzw. eine Ebene, bis zu der sich die reliefartige rückseitige Abschlussfläche der Backplatte erstreckt. In diesem Fall sind die Träger in diesem Relief bzw. in dessen einhüllenden versenkt.

In einer bevorzugten Ausführungsform weisen die Träger einen im Wesentlichen rechteckigen Querschnitt bzw. ein rechteckiges Profil auf. Es entspricht jedoch auch dem Erfindungsgedanken, Träger mit anderen Querschnittsformen vorzusehen wie beispielsweise Träger mit einem runden Querschnitt oder ein I-Profil. Auch in diesen Fällen können die Träger von drei Seiten von der Nut und/oder der Backplatte umgeben sein, selbst wenn diese drei Seiten ineinander übergehen oder die Seiten mehrflächig ausgebildet sind.

In allen Ausführungsformen ist bevorzugt vorgesehen, dass die von der Heizanordnung in die freiliegenden Abschnitte der Träger eingebrachte Wärmeenergie über die in den Backplatten versenkten Abschnitte der Träger auf die Backplatten übertragen wird.

In weiterer Folge wird die Erfindung anhand der Figuren weiter beschrieben.
**Fig. 1** zeigt eine schematische Schnittdarstellung einer Ausführungsform einer Backvorrichtung.
**Fig. 2** zeigt eine Schrägansicht einer möglichen Ausgestaltung einer Backplattenvorrichtung mit einer Backplatte.
**Fig. 3** zeigt eine schematische Schnittdarstellung einer möglichen Backplattenvorrichtung.

Wenn nicht anders angegeben, so entsprechen die Bezugszeichen in den Figuren folgenden Komponenten:
Traggestell 1, Träger 2, Backplatte 3, Verbindungsvorrichtung 4, Rückseiten (der Backplatten) 5, Nut 6, Abstand (zu den Rändern) 7, Längsrichtung (der Träger) 8, Querrichtung (der Träger) 9, Überstand 10, Seitenteil (der Verbindungsvorrichtungen) 11, Biegelinie 12, Wendepunkt 13, Justieranordnung 14, Stellmittel 15, Verriegelungsvorrichtung 16, Abschlussleiste 17, Backraum 18, Heizanordnung 19, Öffenbereich 20, Waffelentnahmebereich 21, Endlosförderer 22, Backmassenauftragsbereich 23, Schließbereich 24, Induktor 25, Induktorspalt 26, Stufe 27, freiliegender Abschnitt (eines Trägers) 28, versenkter Abschnitt (eines Trägers) 29, Scharnier 30, Justierspalt 31,

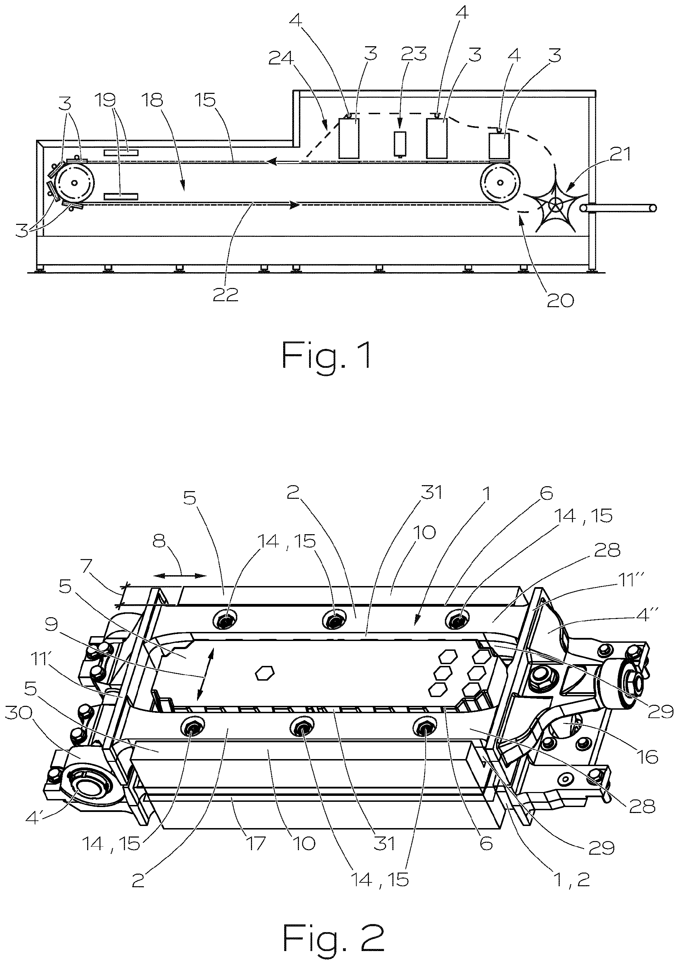

**Fig. 1** zeigt eine schematische Schnittdarstellung einer Backvorrichtung, die insbesondere als Backofen zur industriellen Herstellung von Waffeln ausgebildet ist. Der grundsätzliche Aufbau dieser Backvorrichtungen ist bekannt. Jedoch kann eine derartige Backvorrichtung durch Einsatz der erfindungsgemäßen Backplattenvorrichtungen und/oder des erfindungsgemäßen Backplattensystems verbessert werden.

Die Backvorrichtung umfasst einen Endlosförderer 22, an dem aneinandergereiht mehrere Backplattenvorrichtungen angebracht sind. Dieser Endlosförderer 22 kann beispielsweise eine Kette oder ein anderer geeigneter Endlosförderer 22 sein. In der vereinfachten Darstellung der Fig. 1 sind nicht alle, sondern lediglich einige wenige Backplattenvorrichtungen der Backvorrichtung dargestellt.

Die Backplattenvorrichtungen werden in der Backvorrichtung durch mehrere Bereiche befördert. Insbesondere werden die Backplattenvorrichtungen durch einen Backmassenauftragsbereich 23 befördert, in dem die Waffelbackmasse auf die aufgeklappten Backplattenvorrichtungen aufgetragen wird. Dies geschieht in der Regel durch einen herkömmlichen Teigaufgießer. Die zur Herstellung von Waffeln - im Sinne der Erfindung - geeignete Backmasse enthält etwa 50-70% Wasser und ist daher im unausgebackenen Zustand im Wesentlichen flüssig.

Nach dem Auftragen der Backmasse im Backmassenauftragsbereich 23 werden die Backplattenvorrichtungen in einem Schließbereich 24 geschlossen und anschließend in dieser geschlossenen Stellung verriegelt.

In weiterer Folge werden die Backplattenvorrichtungen durch einen Backraum 18 befördert. In diesem Backraum 18 ist eine Heizanordnung 19 vorgesehen. Diese Heizanordnung 19 ist dazu eingerichtet, den Backraum 18, aber vorrangig die Backplattenvorrichtungen, zu beheizen.

Beim Durchlaufen des Backraums 18 werden die Backplattenvorrichtungen bevorzugt von einer oberen Transportebene auf eine untere Transportebene umgelenkt. Beim Durchlaufen des beheizten Backraums 18 werden die Backplattenvorrichtungen erhitzt. Dabei verdampfen die flüchtigen Bestandteile der in den Backplattenvorrichtungen vorgesehenen Backmasse, insbesondere der Wasseranteil der Backmasse. Durch Expansion des Wasserdampfes baut sich in der zwischen den Backplatten 3 gebildeten Überdruckbackform ein Überdruck auf, dessen Druckkräfte auf die Backplattenvorrichtung wirken.

In weiterer Folge werden die Backplattenvorrichtungen in einem Öffenbereich 20 geöffnet und in einem Waffelentnahmebereich 21 können die fertig gebackenen Waffeln entnommen werden. Anschließend beginnt dieser Herstellungszyklus von neuem.

**Fig. 2** zeigt eine schematische Schrägansicht einer möglichen Ausführungsform einer Backplattenvorrichtung. Die Backplattenvorrichtung umfasst zwei Traggestelle 1, die jeweils zwei Träger 2 aufweisen. Die Träger 2 erstrecken sich von einer Verbindungsvorrichtung 4 zur anderen Verbindungsvorrichtung 4 bzw. sind die Verbindungsvorrichtungen 4 durch die Träger 2 miteinander verbunden. Eine der Verbindungsvorrichtungen 4 ist als Verriegelungsvorrichtung 16 ausgebildet. Die andere Verbindungsvorrichtung 4 ist als Scharnier 30 ausgebildet. An den beiden Traggestellen 1 ist jeweils eine Backplatte 3 angebracht. Die Traggestelle 1 halten dadurch die Backplatten 3. Zwischen den beiden Backplatten 3 wird in der geschlossenen Stellung der Backplattenvorrichtung eine Überdruckbackform gebildet. Dabei wird auf die heißen Backplatten 3 eine Backmasse oder ein Teig aufgetragen. In weiterer Folge wird die Backplattenvorrichtung verschlossen und über die Verriegelungsvorrichtung 16 verriegelt. Durch Verdampfen des flüchtigen Bestandteils der Backmasse entsteht in der Backform ein Überdruck. Hierfür sind zusätzlich herkömmlich wirkende Abschlussleisten 17 wie beispielsweise Dicht- oder Ausdampfleisten vorgesehen.

An den Rückseiten 5 der Backplatten 3 ist für jeden Träger 2 eine Nut 6 vorgesehen. Die Träger 2 sind teilweise oder vollständig in diesen Nuten 6 versenkt. Insbesondere sind die Träger 2 in den Rückseiten 5 der Backplatten 3 versenkt. Die Nuten 6 weisen jeweils einen gewissen Abstand 7 zu den in Längsrichtung 8 der Träger 2 verlaufenden Rändern der Backplatten 3 auf. Das bedeutet insbesondere, dass jeder oder der Träger 2 einen Abstand 7 zu dem nächstliegenden oder benachbarten, in Längsrichtung 8 des Trägers 2 verlaufenden, Randes der Backplatte 3 aufweist. Dadurch haben die Backplatten 3 in Querrichtung 9 der Träger 2 einen gewissen Überstand 10, der die Träger 2 in Querrichtung 9 überragt. Die Träger 2 sind mit ihrem versenkten Abschnitt 29 in die Nuten 6 eingeführt. In diesem Bereich sind die Träger 2 von drei Seiten von der Nut 6 und/oder von der Backplatte 3 umgeben.

Jener Bereich der Träger 2, der nicht in der Backplatte 3 versenkt ist und durch die Backplatte 3 auch nicht abgedeckt ist, ist der freiliegende Abschnitt 28. Dieser ist insbesondere an der nach außen weisenden Seite der Träger 2 angeordnet. Sind die Träger 2 nur teilweise in den Nuten 6 versenkt, so kann der freiliegende Abschnitt 28 sich auch auf andere Seiten der Träger 2 erstrecken.

Die Backplattenvorrichtung umfasst in der vorliegenden Ausführungsform zwei Seitenteile 11. Zusammen mit den beiden Seitenteilen 11 bilden die Träger 2 ein leiterförmiges Traggestell 1. Die beiden Träger 2 erstrecken sich im Wesentlichen parallel zueinander von einem Seitenteil 11 zum gegenüberliegenden Seitenteil 11. An den Seitenteilen 11 sind jeweils die Verbindungsvorrichtungen 4 angebracht. Diese Seitenteile 11 können in allen Ausführungsformen jedoch auch Teile der Verbindungsvorrichtungen 4 oder der Träger 2 sein. So können die Verbindungsvorrichtungen 4 beispielsweise selbsttragend ausgebildet sein, sodass die Träger 2 direkt an die Verbindungsvorrichtungen 4 anschließen. In diesem Falle wäre ein Seitenteil 11 ein Teil einer Verbindungsvorrichtung 4. Ebenso können sich die Träger 2 im Bereich der Verbindungsvorrichtung 4 aufweiten oder gewinkelt ausgebildet sein, um die Seitenteile 11 zu bilden.

In bevorzugter Weise weist das Traggestell 1 eine mittige Öffnung bzw. ein Fenster auf, in das die Backplatte 3 ragt bzw. durch das die Backplatte 3 hindurchragt. Dies wird insbesondere dadurch ermöglicht, da die Träger 2 in den Rückseiten 5 der Backplatten 3 zumindest teilweise versenkt sind. Die durch dieses Fenster ragenden Rückseiten 5 der Backplatten 3 bilden einen Teil der Heizflächen der Backplatten 3, die durch eine Heizanordnung 19 (in Fig. 2 nicht dargestellt) beheizt werden. Zusätzlich umfasst die Backplatte 3 jedoch auch noch zwei Bereiche, die jeweils als Überstand 10 bezeichnet sind. Diese Überstände 10 bilden ebenfalls einen Teil der Rückseiten 5 und dadurch einen Teil der Heizfläche der Backplatte 3.

Die Nuten 6 sind der Form und dem Verlauf der Träger 2 angepasst. Insbesondere können sich die Träger 2 in deren Verlauf aufweiten bzw. Einschnürungen aufweisen. Die Nuten 6 sollen an den Verlauf und die Form der Träger 2 angepasst sein. Dennoch kann zwischen den Trägern 2 und den Nuten 6 jeweils ein Spalt, insbesondere ein Justierspalt 31 freigehalten sein. Dieser Justierspalt 31 ermöglicht eine Relativbewegung der Backplatten 3 gegenüber den Trägern 2. Die Backplattenvorrichtung der Fig. 2 weist eine Justieranordnung 14 auf. Diese Justieranordnung 14 umfasst in der vorliegenden Ausführungsform mehrere Stellmittel 15. Die Justieranordnung 14 erlaubt die Wahl der Lage einer Backplatte 3 gegenüber dem jeweiligen Traggestell 1. Insbesondere kann durch die Justieranordnung 14 auch der Verlauf bzw. eine Krümmung der Backplatte 3 eingestellt werden. Beispielsweise sind, wie in dieser Ausführungsform, sechs Stellmittel 15 an einem Traggestell 1 angeordnet. Über diese Stellmittel 15 kann jeweils der Abstand zwischen dem Traggestell 1 und dem entsprechenden Bereich der Backplatte 3 eingestellt werden. Dadurch kann an unterschiedlichen Punkten bzw. Bereichen der Backplatte 3 eine Justierung vorgenommen werden. Werden beispielsweise die mittleren beiden Stellmittel 15 verstellt, ohne die äußeren vier Stellmittel 15 zu verändern, so kann eine Durchbiegung der Backplatte 3 und gegebenenfalls eine Vorspannung der Backplatte 3 gegenüber der Überdruckbackform erfolgen.

Durch die Justieranordnung 14 und deren Stellmittel 15 kann dadurch die Produktdicke eingestellt werden. Die Träger 2 wirken als Biegeträger zur Aufnahme der in der Überdruckbackform entstehenden Druckkräfte. Insbesondere werden die Träger 2, je nach Druck, um ein gewisses Maß aufgebogen. Um zu verhindern, dass das in der Backform gebackene Produkt im Mittenbereich eine größere Produktdicke aufweist, kann die Backplatte 3 im Mittenbereich vorgespannt werden bzw. kann im Mittenbereich eine kleinere Backformhöhe gewählt werden, sodass unter Druckbelastung eine konstante Waffeldicke erzielt wird.

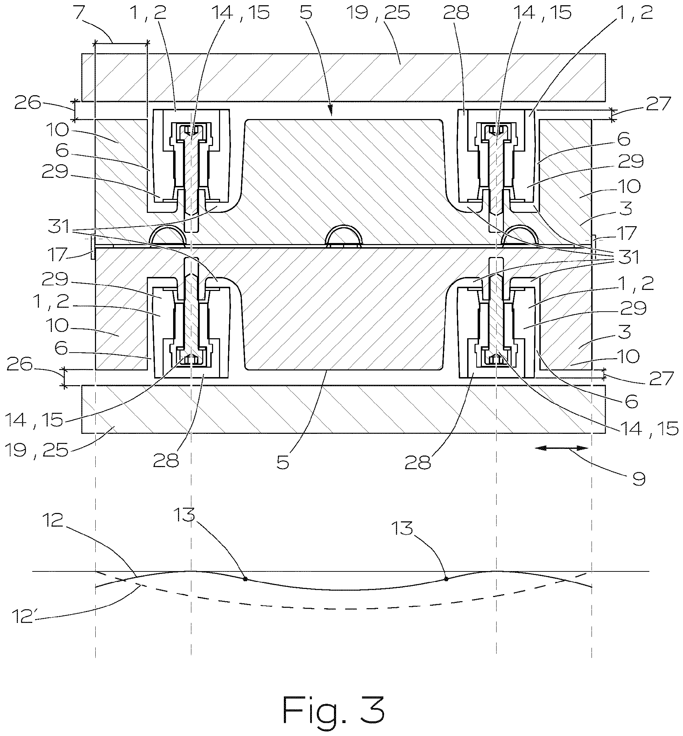

**Fig. 3** zeigt eine schematische Schnittdarstellung einer Backplattenvorrichtung, insbesondere der Backplattenvorrichtung aus Fig. 2. Die Schnittebene verläuft in Querrichtung 9 der Träger 2. Die Träger 2 sind Teile der Traggestelle 1. Die Traggestelle 1 sind vorgesehen, um die Backplatten 3 zu tragen. Zwischen den Backplatten 3 ist in der geschlossenen Stellung der Backplattenvorrichtung, wie auch insbesondere in Fig. 2 dargestellt, eine Überdruckbackform gebildet. Die Rückseiten 5 der Backplatten 3, also jene Seiten der Backplatten 3, die nach außen weisen, sind jeweils mit einer Nut 6 versehen. Bevorzugt ist für jeden Träger 2 eine Nut 6 vorgesehen. Die Träger 2 sind in den Nuten 6 angeordnet, womit die Träger 2 in den Rückseiten 5 der Backplatten 3 zumindest teilweise versenkt sind. Die Nuten 6 bzw. die Träger 2 verlaufen in einem gewissen Abstand 7 zu den in Längsrichtung 8 verlaufenden, benachbarten Rändern der Backplatte 3. Dadurch weist die Backplatte 3 einen bestimmten Überstand 10 auf.

Die Nuten 6 umgreifen bzw. umgeben die Träger 2 in deren versenkten Abschnitten 29 an drei Seiten. Zur Justierung der Backplatten 3 gegenüber den Trägern 2 ist eine Justieranordnung 14 vorgesehen. Die Justieranordnung 14 umfasst mehrere Stellmittel 15. Durch Betätigen der Stellmittel 15 kann der Verlauf und die Lage der Backplatte 3 gegenüber dem Traggestell 1 gewählt bzw. verändert werden. Insbesondere sind die Backplatten 3 ausschließlich über die Stellmittel 15 mit dem Traggestell 1 verbunden. Zwischen den Trägern 2 und den Nuten 6 ist jeweils ein Justierspalt 31 freigehalten, der eine Anpassung der Lage der Backplatte 3 ermöglicht. Gegebenenfalls kann dieser Justierspalt 31 in allen Ausführungsformen auch mit einem Material ausgefüllt werden.

Die Träger 2 sind bevorzugt in den Nuten 6 versenkt. Gegebenenfalls überragen die Träger 2 die Rückseiten 5 der Backplatten 3 um eine gewisse Stufe 27. Diese Stufe 27 bildet einen Teil oder den gesamten freiliegenden Abschnitt 28 eines Trägers 2. In der vorliegenden Ausführungsform der Fig. 3 wird als Heizanordnung 19 eine Induktoranordnung mit mehreren Induktoren 25 eingesetzt. Die Induktoren 25 sind derart angeordnet, dass zwischen den Backplatten 3 und den Induktoren 25 ein Induktorspalt 26 freigehalten ist. Dieser Induktorspalt 26 soll so klein wie möglich gehalten werden, um die Heizeffizienz des Induktors 25 zu optimieren. Ragt der Träger 2 mit seinem freiliegenden Abschnitt 28 bzw. mit seiner Stufe 27 über die Rückseite 5 einer Backplatte 3, so ist diese Stufe 27 bevorzugt derart dimensioniert, dass sie kleiner ist als der Induktorspalt 26. Dadurch wird eine Kollision des Trägers 2 mit dem Induktor 25 verhindert.

Der Induktorspalt 26 ist somit bevorzugt in allen Ausführungsformen größer als die Höhe der Stufe 27, um die ein Träger 2 die Rückseite 5 der jeweiligen Backplatte 3 überragt.

Durch die spezielle Anordnung der Träger 2 in der Backplatte 3 kann die Produktqualität des zu backenden Produktes verbessert werden, ohne die Effizienz der Anlage zu beeinträchtigen.

Durch das Versenken der Träger 2 in den Rückseiten 5 der Backplatten 3 kann eine effiziente und gleichmäßige Beheizung der Backplatten 3 erfolgen. Eine gleichmäßige Beheizung ist insbesondere wichtig für die Produktqualität. Zudem kann die einfache Justierbarkeit durch die Justieranordnung 14 ebenfalls die Produktqualität verbessern. Die Justieranordnung 14 ist insbesondere im Bereich der Träger 2 angeordnet, sodass durch die Justieranordnung 14 die Beheizung der Backplatten 3 nicht weiter beeinträchtigt wird.

Die Träger 2 sind in der vorliegenden Ausführungsform der Backplattenvorrichtung beabstandet von den seitlichen Rändern der Backplatten 3 angeordnet. Dies verbessert die kinematische Wirkung der Träger 2 gegenüber den Druckkräften der Überdruckbackform. Die unterhalb der Backplattenvorrichtung dargestellte Linie ist eine schematische, in ihrem Maßstab übertriebene, Biegelinie 12 der unteren Backplatte 3 unter dem Einfluss der Druckkräfte der Überdruckbackform. Die Biegelinie 12 der anderen Backplatte 3 verläuft in analoger Weise.

Zur Verdeutlichung des Vorteils der Anordnung der Träger 2 ist eine alternative Biegelinie 12' eingezeichnet. Diese ist eine hypothetische Biegelinie 12, die auftreten würde, wenn die Backplatten 3 nur im Randbereich gehalten werden. In diesem Fall wölbt sich die Backplatte 3 von Randbereich zu Randbereich in einer durchgehenden Linie ohne Wendepunkte 13. Die maximale Verbiegung tritt im Mittenbereich der Backplatte 3 auf.

Durch die in der Ausführungsform der Fig. 2 gewählte, von den Rändern beabstandete Anordnung der Träger 2 wirkt die Druckkraft der Überdruckbackform sowohl seitlich auf die Überstände 10 als auch mittig. Die Biegelinie 12 hat im vorliegenden Fall dadurch zwei Wendepunkte 13 und/oder ist glockenförmig ausgebildet. Die maximale Biegung im Mittenbereich der Biegelinie 12 ist gegenüber der seitlichen Halterung mit der Biegelinie 12' reduziert. Dadurch wird die Dickenabweichung im Mittenbereich der Überdruckbackform verringert, wodurch die Produktqualität ebenfalls verbessert wird.

Ein weiterer Vorteil, der durch das Versenken der Träger 2 in den Rückseiten 5 der Backplatten 3 erzielt wird, ist, dass die Träger 2, die durch die Heizanordnung 19 ebenfalls beheizt werden, ihre Wärmeenergie an drei Seiten im versenkten Abschnitt 29 an die Backplatte 3 abgeben können. Zudem wird auch der Randbereich der Backplatte 3 durch die Beheizung des Überstands 10 direkt durch die Heizanordnung 19 beheizt.

Grundsätzlich kann die Backplattenvorrichtung der Fig. 3 und/oder der Fig. 2 auch für eine andere Beheizung, beispielsweise für eine Gasbeheizung, eingesetzt werden.

In diesem Fall ist es vorteilhaft, die Oberfläche der Rückseiten 5 der Backplatten 3 reliefartig auszugestalten, um deren Fläche zu vergrößern, sodass der Wärmeeintrag durch die Gasflamme verbessert werden kann. Auch in diesem Fall können die Träger 2 in den Rückseiten 5 der Backplatte 3 versenkt sein. Als Rückseite 5 wird in diesem Fall eine außenliegende einhüllende des Reliefs verstanden, also beispielsweise eine im Wesentlichen gerade Fläche bzw. eine Ebene, bis zu der sich die reliefartige rückseitige Abschlussfläche der Backplatte 3 erstreckt. In diesem Fall sind die Träger 2 in diesem Relief bzw.in dessen einhüllenden versenkt.

## Patentansprüche

1. **Backplattenvorrichtung,** insbesondere Backzange, zur Herstellung unter Überdruck gebackener, knusprig spröder Waffeln aus einer im unausgebackenen Zustand 50-70% Wasser enthaltenden Backmasse, umfassend:
- zwei Traggestelle (1), die jeweils mindestens einen Träger (2) aufweisen,
- zwei Backplatten (3), die jeweils an einem der Traggestelle (1) angebracht sind,
- und zwei beidseitig der Backplatten (3) angeordnete und über die Träger (2) miteinander verbundene Verbindungsvorrichtungen (4),
- wobei die Verbindungsvorrichtungen (4) und die Traggestelle (1) derart ausgestaltet sind, dass die Backplattenvorrichtung öffenbar, schließbar und in der geschlossenen Stellung zur Bildung einer Überdruckbackform verriegelbar ausgebildet ist,
**dadurch gekennzeichnet,**
- **dass** in den der Überdruckbackform abgewandten Rückseiten (5) der Backplatten (3) der Form und dem Verlauf der Träger (2) angepasste Nuten (6) vorgesehen sind,
- und **dass** die Träger (2) der Traggestelle (1) zumindest teilweise in den Nuten (6) versenkt sind.

2. Backplattenvorrichtung nach Anspruch 1, **dadurch gekennzeichnet,**
- **dass** die Träger (2) jeweils von drei Seiten von den Nuten (6) umgeben bzw. umgriffen sind,
- und/oder dass die Nuten (6) und die in den Nuten (6) versenkten Träger (2) einen Abstand (7) zu den in Längsrichtung (8) der Träger (2) verlaufenden Rändern der Backplatten (3) aufweisen,
- und/oder dass die Backplatten (3) die Nuten (6) und die in den Nuten (6) versenkten Träger (2) in Querrichtung (9) der Träger (2) mit einem Überstand (10) überragen, wobei der Überstand (10) mehr als 5% der in Querrichtung (9) der Träger (2) gemessenen Backplattenbreite beträgt.

3. Backplattenvorrichtung nach einem der Ansprüche 1 oder 2, **dadurch gekennzeichnet,**
- **dass** als Verbindungsvorrichtungen (4) eine erste Verbindungsvorrichtung (4') und eine zweite Verbindungsvorrichtung (4") vorgesehen sind,
- **dass** sich die Träger (2) von der ersten Verbindungsvorrichtung (4') bis zur zweiten Verbindungsvorrichtung (4") erstrecken,
- und **dass** die Träger (2) als Biegeträger zur Aufnahme der beim Backen in der Überdruckbackform ausgehenden Druckkräfte wirken,
- insbesondere dass die Traggestelle (1) jeweils zwei an gegenüberliegenden Seiten angeordnete Seitenteile (11), insbesondere ein erstes Seitenteil (11') und ein zweites Seitenteil (11"), aufweisen, an denen die Verbindungsvorrichtungen (4) angebracht sind und sich die Träger (2) jeweils vom ersten Seitenteil (11') bis zum zweiten Seitenteil (11") erstrecken und dadurch ein starres Traggestell (1) bilden.

4. Backplattenvorrichtung nach Anspruch 3, **dadurch gekennzeichnet, dass** pro Traggestell (1) zwei Träger (2) vorgesehen sind, die sich beabstandet voneinander und beabstandet von den in Längsrichtung (8) der Träger (2) verlaufenden Rändern der Backplatte (3) von der ersten Verbindungsvorrichtung (4') zur zweiten Verbindungsvorrichtung (4') bzw. vom ersten Seitenteil (11') zum zweiten Seitenteil (11') erstecken.

5. Backplattenvorrichtung nach einem der Ansprüche 1 bis 4, **dadurch gekennzeichnet, dass** die Backplatten (3) während des Backprozesses durch den in der Überdruckbackform herrschenden Überdruck aufgebogen bzw. aufgewölbt sind, und dass die, in einer normal zur Längsrichtung (8) der Träger (2) verlaufenden Schnittebene betrachtete Biegelinien (12) der Backplatten (3) jeweils mindestens zwei Wendepunkte (13) aufweisen.

6. Backplattenvorrichtung nach einem der Ansprüche 1 bis 5, wobei die Träger (2) jeweils derart in den Backplatten (3) versenkt sind,
- dass die der Überdruckbackform abgewandten Rückseiten (5) der Backplatten (3) zusammen mit den freiliegenden Abschnitten (28) der Träger (2) die außenliegenden Heizflächen der Backplattenvorrichtung bilden,
- und derart, dass die über die freiliegenden Abschnitte (28) der Träger (2) eingebrachte Wärmeenergie über die in den Backplatten (3) versenkten Abschnitte (29) der Träger (2) an die Backplatten (3) bzw. die Nuten (6) der Backplatten (3) übertragen wird.

7. Backplattenvorrichtung nach einem der Ansprüche 1 bis 6, **dadurch gekennzeichnet,**
- **dass** pro Backplatte (3) eine Justieranordnung (14) vorgesehen ist, die eine Einstellung der Lage und/oder des Verlaufs einer Backplatte (3) gegenüber jenem Traggestell (1) erlaubt, an dem die Backplatte (3) angebracht ist,
- und **dass** die Justieranordnungen (14) mehrere in oder an den Trägern (2) angeordnete und/oder durch die Träger (2) hindurch verlaufende Stellmittel (15), wie insbesondere Stellschrauben umfassen.

8. Backvorrichtung nach Anspruch 7, **dadurch gekennzeichnet,**
- **dass** die Backplatten (3) jeweils durch die Justieranordnungen (14) mit dem Traggestell (1) bzw. deren Trägern (2) verbunden sind,
- und/oder dass die Backplatten (3) ausschließlich durch die Justieranordnungen (14) an den Traggestellen (1) bzw. deren Trägern (2) angebracht sind.

9. Backplattenvorrichtung nach einem der Ansprüche 1 bis 8, **dadurch gekennzeichnet, dass** die Rückseiten (5) der Backplatten (3) jeweils eine Oberfläche zur gleichmäßigen Beheizung der Backplatte (3) und der Überdruckbackform, wie insbesondere ein Waben-, Pyramiden- oder Rippenmuster, oder eine glatte Oberfläche, aufweisen.

10. Backplattenvorrichtung nach einem der Ansprüche 1 bis 9, **dadurch gekennzeichnet,**
- **dass** die erste Verbindungsvorrichtung (4') als Scharnier (30) ausgebildet ist und die zweite Verbindungsvorrichtung (4") als Verriegelungsvorrichtung (16), sodass die Backplattenvorrichtung als Backzange ausgebildet ist,
- und insbesondere dass zur Bildung der Überdruckbackform Abschlussleisten (17) wie Dichtleisten und/oder Dampfleisten und/oder Ausbackleisten vorgesehen sind.

11. **Backplattensystem** umfassend eine Backplattenvorrichtung nach einem der Ansprüche 1 bis 10 und mindestens eine weitere Backplatte (3), die eine mit einem der Traggestelle (1) verbundene Backplatte (3) ersetzt, wobei die weitere Backplatte (3) insbesondere:
- eine defekte oder verschlissene Backplatte (3) gleichartig ersetzt,
- eine Backplatte (3) zur Herstellung einer anderen Waffelform ist,
- eine Backplatte (3) mit einer anders ausgestalteten Rückseite (5) ist,
- oder eine Backplatte (3) aus einem anderen Material ist.

12. **Backplatte** (3), eingerichtet zum Einsatz in einer Backplattenvorrichtung nach einem der Ansprüche 1 bis 10 und/oder in einem Backplattensystem nach Anspruch 11, umfassend eine Rückseite (5) mit einem Bereich, insbesondere mit einer Nut (6), zur zumindest teilweisen Aufnahme eines Trägers (2).

13. **Backplattengestell,** umfassend:
- zwei Traggestelle (1), die jeweils mindestens einen Träger (2) aufweisen,
- und zwei beidseitig der Backplatten (3) angeordnete und über die Träger (2) miteinander verbundene Verbindungsvorrichtungen (4),
- wobei die Verbindungsvorrichtungen (4) und die Traggestelle (1) derart ausgestaltet sind, dass das Backplattengestell öffenbar, schließbar und in der geschlossenen Stellung zur Bildung einer Überdruckbackform verriegelbar ausgebildet ist, **dadurch gekennzeichnet,**
- **dass** die Traggestelle (1) zum Bilden einer Backplattenvorrichtung nach einem der Ansprüche 1 bis 10 eingerichtet sind,
- und/oder dass die Traggestelle (1) zum Einsatz in einem Backplattensystem nach Anspruch 11 eingerichtet sind.

14. **Backvorrichtung** zur Herstellung unter Überdruck gebackener, knusprig spröder Waffeln aus einer im unausgebackenen Zustand 50-70% Wasser enthaltenden Backmasse, umfassend einen Endlosförderer (22) und mehrere entlang des Endlosförderers (22) vorgesehene Backplattenvorrichtungen, die aneinandergereiht jeweils nacheinander:
- einen Backmassenauftragsbereich (23) zum Auftrag einer Backmasse auf eine geöffnete Backplattenvorrichtung,
- einen Schließbereich (24) zum Schließen der Backplattenvorrichtungen,
- einen Backraum (18) zum Backen der Backprodukte in den geschlossenen Backplattenvorrichtungen, in dem mindestens eine Heizanordnung (19) zur Beheizung der im Backraum (18) befindlichen Backplattenvorrichtungen vorgesehen ist,
- einen Öffenbereich (20) zum Öffnen der Backplattenvorrichtungen
- und einen Waffelentnahmebereich (21) zur Entnahme der gebackenen Waffeln aus den geöffneten Backplattenvorrichtungen, durchlaufen,
**dadurch gekennzeichnet, dass** die Backplattenvorrichtungen nach einem der Ansprüche 1 bis 10 ausgebildet sind.

15. Backvorrichtung nach Anspruch 14, **dadurch gekennzeichnet,**
- **dass** die Heizanordnung (19) mindestens einen Induktor (25) zur induktiven Beheizung einer Backplatte (3) umfasst, wobei zwischen dem Induktor (25) und den an dem Induktor (25) vorbeibewegten Backplatten (3) jeweils ein Induktorspalt (26) mit einer Spaltbreite freigehalten ist,
- und **dass** eine gegebenenfalls bestehende Stufe (27), um die einer der Träger (2) aus der Rückseite (5) einer Backplatte (3) steht, kleiner ist als die Spaltbreite des Induktorspalts (26).
